# EUROPEAN PATENT APPLICATION

(11) **EP 2 690 403 A1**
(43) Date of publication of application: **29.01.2014**
(21) Application number: 12005424.2
(22) Date of filing: 25.07.2012
(51) Int. Cl.: G01C 21/32

(54) **Apparatus for and method of verifying stored map data**

(71) Applicant: Astrium GmbH, 82024 Taufkirchen (DE)
(72) Inventor: Weidner, Lucas, 13125 Berlin (DE); Schäfer, Christof, Dr., 85551 Kirchheim (DE)
(74) Representative: Avenhaus, Beate

(57) **Abstract**

An apparatus for verifying stored map data comprises: a navigation device (3) adapted to determine the position of the apparatus and to locate said position on a map defined by said stored map data; a camera (4); a direction determination device (5) adapted to determine the viewing direction of said camera (4); a data transmission device (6) adapted to transmit image data taken by said camera (4) to a designated receiver; and a control device (7) adapted to detect whether the determined position of the apparatus is located on a traffic infrastructure object of said map or not and to transmit at least one image taken by said camera (4) together with the position data and the viewing direction data to said receiver when the apparatus is not located on a traffic infrastructure object.

## Description

### FIELD OF THE INVENTION

The present invention is directed to an apparatus for verifying stored map data and to a method of verifying stored map data. The invention is further directed to a software implementing the steps of such a method.

### BACKGROUND OF THE INVENTION

Stored map data, in particular data of a navigation system, will already after a short time become out of date because e.g. new roads are constructed and opened for the traffic in the real world. It will thus be necessary from time to time to collect new map data and to implement these new map data into the set of already stored map data. This process, however, is very complex and expensive.

Some navigation data provider offer a service portal to which a user can send information concerning map errors. A communicated map error is usually being verified by service personnel of the provider and thereupon the map is corrected.

### OBJECT OF THE INVENTION

It is an object of the present invention to provide an apparatus for and a method of verifying stored map data which allow a fast detection of map errors in stored map data so that a correction of the map data can be carried out quickly and in an inexpensive way.

### SUMMARY OF THE INVENTION

The problem directed to the apparatus is solved by an apparatus with the features of claim 1.

This apparatus comprises a navigation device adapted to determine the position of the apparatus and to locate said position on a map defined by said stored map data; a camera; a direction determination device adapted to determine the viewing direction of said camera; a data transmission device adapted to transmit image data taken by said camera to a designated receiver and a controlling device adapted to detect whether the determined position of the apparatus is located on a traffic infrastructure object of said map or not and to transmit at least one image taken by said camera together with the position data and the viewing direction data to said receiver when the apparatus is not located on a known traffic infrastructure object.

This apparatus according to the present invention allows on the one hand an automatic detection of map errors and provides on the other hand at least one image of the scene at the point where the map error is detected. The transmission of these data to a dedicated receiver, e.g. a receiver connected to a server of a map data provider, allows the service personnel of the provider to have a look at the scene and to immediately see whether a new traffic infrastructure object (e.g. a street, a way, a path, a railway, a bridge, etc.) is now available at the position communicated to the receiver in form of the position data.

It is in particular advantageous when the features of the apparatus according to the present invention are implemented into camera-equipped navigation systems like smartphones or automotive navigation systems equipped with a camera. This allows a fast distribution of apparatuses according to the present invention and, in turn, a large amount of feedback information transmitted to navigation map data providers so that map errors can be corrected within hours so that the stored map data are nearly always up to date.

It is advantageous when the camera is a video camera. A video sequence of images taken with such a video camera contains more information for the service personnel which is concerned with updating the map data.

It can also be advantageous when the apparatus further comprises an image storage device in which images taken by the camera are stored together with the position data and the viewing direction data. This allows a time-shifted data transmission.

In another preferred embodiment of the apparatus according to the present invention the control device is adapted to transmit the image data only when the apparatus is moving or has moved for at least a given time on a track which is not identified as a traffic infrastructure object stored in said map. This further development ensures that map errors are reported only when the apparatus is moving or has moved for a certain time on a track that is not yet stored in the map data as being an infrastructure object like a road or a path etc. This avoids that supposed map errors are reported when e.g. a car has accidently left a road.

It is further advantageous that said direction determination device comprises a compass and/or an inertial navigation system. This further development allows in connection with the determination of the viewing direction of said camera a precise determination of the viewing direction and of the direction of motion of the apparatus when the camera is directed to the direction of motion.

It is also advantageous that the apparatus comprises an accelerometer device which also allows a precise determination of the direction of motion of the apparatus.

The problem to be solved by the present invention directed to a method is solved by the method with the features of claim 7, preferably when an apparatus according to the present invention is used in carrying out said method.

The method according to the present invention comprises the steps of:
a) determining the actual position and obtaining the related position data;
b) comparing the actual position data with stored map data and locating the actual position on the map defined by the map data;
c) determining whether a traffic infrastructure object is provided for the actual position on the map;
d) taking at least an image of the real scene and transmitting the image data together with the position data to a receiver if no traffic infrastructure object could be identified in the stored map data for the actual position.

This method allows a quick and inexpensive collection of map errors and can thus serve as a very helpful basis for keeping map data up to date.

Preferably steps a) to c) are repeatedly carried out sequently for a given time and in step d) a video sequence of images is taken in the moving direction during said given time and is transmitted to said receiver together with the position data and the moving direction data if no traffic infrastructure object could be identified in the stored map data for the respective positions.

In a preferred further development said video sequence of images is stored in a memory and the stored video sequence is transmitted to said receiver when it is determined in step c) that the map contains a traffic infrastructure object for the actual position again. It is thus possible to detect the starting point and the endpoint of a new traffic infrastructure object (like a new road) and also the course of this new traffic infrastructure object between the starting point and the endpoint. The data of this new traffic infrastructure object are first collected in the storage device and are then transmitted together to the receiver.

In order to protect the personal data of the person who has carried out the method it can be advantageous that the data transmission in step d) is carried out only upon approval by the user. This allows that the user himself decides whether the data of the track he just passed are transmitted to the receiver or are kept secret. In this connection it is further to be noted that the data transmitted to the receiver are anonymous so that it cannot be determined who sent the data to the receiver.

The invention is also directed to a computer program product comprising a computer program implementing the features of a method according to one of claims 7 to 10.

### BRIEF DESCRIPTION OF THE DRAWING

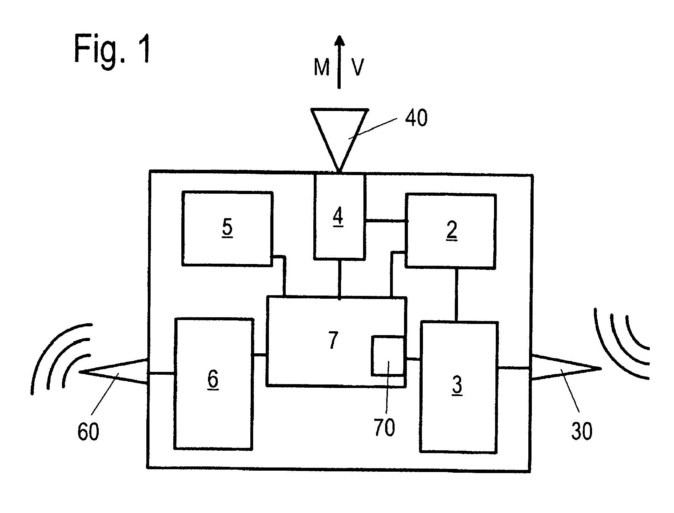

The invention is now described by reference to the drawing in which the single
- **Fig. 1**: shows a schematic design of an apparatus according to the invention.

### DETAILED DESCRIPTION OF THE INVENTION

Fig. 1 shows schematically an apparatus 1 of the present invention for verifying map data stored in a memory of a storage device 2. The apparatus 1 comprises a navigation device 3 which is adapted to determine the position of the apparatus. This navigation device 3 can be a conventional satellite navigation device which is usually provided in smartphones or in automotive navigation systems. The navigation device 3 is connected to a navigation antenna 30 which receives navigation data in a conventional way, e.g. from navigation satellites. The navigation device is connected to said storage device 2 in which map data are stored in a memory. The navigation device 3 is thus able to determine the position of the apparatus 1 on the basis of the received navigation data and to locate said determined position on a map which is defined by said map data stored in the storage device 2.

The apparatus 1 is further equipped with a camera 4 which can take single pictures or which can take a sequence of pictures in form of a movie. The camera 4 is equipped with a lens system 40 defining the viewing direction V of camera 4. The camera 4 is connected to the data storage device 2 so that images or movies taken by camera 4 can be stored in a memory of storage device 2.

A direction determination device 5 comprises a compass and/or an inertial navigation system so that the direction determination device 5 is adapted to determine the viewing direction V of camera 4.

A data transmission device 6 is provided in the apparatus 1 and is connected to a transmission antenna 60 so that the data transmission device is adapted to transmit data from said apparatus 1 to a remote receiver in a wireless manner.

A control device 7 of the apparatus 1 is connected to the camera 4, to the storage device 2, to the direction determination device 5, to the navigation device 3 and to the data transmission device 6.

The control device 7 is adapted to detect in connection with the navigation device 3 whether the determined position of the apparatus 1 is located on a traffic infrastructure object of said map defined by the map data stored in the data storage device 2. Control device 7 has a decision means 70. In case the determined actual position is not located on a traffic infrastructure object of said map the decision means 70 decides to transmit the image data of an image taken by camera 4 or recently stored in a memory of the storage device 2 via the transmission device 6 and antenna 60 to said remote receiver (not shown).

The most effective working mode of apparatus 1 is carried out when apparatus 1 is moving wherein the moving direction M is equal to the viewing direction V of camera 4. In this dynamic working mode a sequence of images is taken by camera 4 (e.g. a movie) and this sequence is stored in a memory of storage device 2 together with the position data and the data representing a viewing/moving direction V/M for a predetermined time interval. At the end of said time interval the image data, the related position data and direction data are transmitted by the transmission device 6 via antenna 60 to the receiver.

This interval process can be repeated several times, for example until the control device has determined that an actual position is again located on a known traffic infrastructure object provided in the map defined by the stored map data. This allows an exact tracking of a new track which is not yet stored as a known traffic infrastructure object in the storage device 2. The map data provider who receives the transmitted data through the remote receiver obtains thus the exact course data of a new traffic infrastructure object and also image data like a video showing the scene along the course taken in the moving direction of apparatus 1 so that the service personnel of the navigation data provider can decide whether the newly received position data define e.g. a new road, a new railroad, a new waterway, a new walking path etc.

Reference numerals in the claims, in the description and in the drawings are provided only for a better understanding of the invention and shall not delimit the scope of protection which is defined by the wording and meaning of the claims.

### List of reference signs

- 1: Apparatus
- 2: Storage device
- 3: Navigation device
- 4: Camera
- 5: Determination device
- 6: Transmission device
- 7: Control device
- 30: Antenna
- 40: Lens system
- 60: Antenna
- 70: Decision means

## Claims

1. Apparatus for verifying stored map data comprising:
- a navigation device (3) adapted to determine the position of the apparatus and to locate said position on a map defined by said stored map data;
- a camera (4);
- a direction determination device (5) adapted to determine the viewing direction of said camera (4);
- a data transmission device (6) adapted to transmit image data taken by said camera (4) to a receiver, and
- a control device (7) adapted to detect whether the determined position of the apparatus is located on a traffic infrastructure object of said map or not and to transmit at least one image taken by said camera (4) together with the position data and the viewing direction data to said receiver when the apparatus is not located on a known traffic infrastructure object.

2. Apparatus according to claim 1,
**characterized in that**
the camera (4) is a video camera.

3. Apparatus according to claim 1 or 2,
**characterized in that**
the apparatus further comprises an image storage device (2) in which images taken by the camera (4) are stored together with the position data and the viewing direction data.

4. Apparatus according to one of the preceding claims,
**characterized in that**
the control device (7) is adapted to transmit the image data only when the apparatus is moving or has moved for at least a given time on a track which is not identified as a traffic infrastructure object stored in said map.

5. Apparatus according to one of the preceding claims,
**characterized in that**
said direction determination device (5) comprises a compass and/or an inertial navigation system.

6. Apparatus according to one of the preceding claims,
**characterized in that**
the apparatus comprises an accelerometer device.

7. A method of verifying stored map data, preferably with an apparatus according to one of the preceding claims, the method comprising the steps of:
a) determining the actual position and obtaining the related position data;
b) comparing the actual position data with stored map data and locating the actual position on the map defined by the map data;
c) determining whether a traffic infrastructure object is provided for the actual position on the map;
d) taking at least one image of the real scene and transmitting the image data together with the position data to a receiver if no traffic infrastructure object could be identified in the stored map data for the actual position.

8. A method according to claim 7,
**characterized**
**in that** steps a) to c) are repeatedly carried out sequently for a given time and in that in step d) a video sequence of images is taken in the moving direction during said given time and is transmitted to said receiver together with the position data and the moving direction data if no traffic infrastructure object could be identified in the stored map data for the respective positions.

9. A method according to claim 8,
**characterized**
**in that** said video sequence of images is stored in a memory and
**in that** the stored video sequence is transmitted to said receiver when it is determined in step c) that the map contains a traffic infrastructure object for the actual position again.

10. A method according to claim 7 to 9,
**characterized**
**in that** the data transmission in step d) is carried out only upon approval by a user.

11. A computer program product comprising a computer program implementing the features of a method according to one of claims 7 to 10.
